Europäisches Patentamt

European Patent Office

Office européen des brevets

(11) Publication number: **0 405 798 A2**

# EUROPEAN PATENT APPLICATION

(21) Application number: 90306522.5

(22) Date of filing: 14.06.90

(51) Int. Cl.5: **C08J 5/12, C09J 133/06,**
**//C08L21:00**

(30) Priority: 30.06.89 US 374959

(43) Date of publication of application:
**02.01.91 Bulletin 91/01**

(84) Designated Contracting States:
**DE FR GB IT SE**

(71) Applicant: **MINNESOTA MINING AND
MANUFACTURING COMPANY
3M Center, P.O. Box 33427
Saint Paul, MN 55133- 3427(US)**

(72) Inventor: **Levens, Dennis L. c/o Minnesota
Mining and
Manufacturing Company 2501 Hudson Road
P.O. Box 33427 St. Paul Minnesota 55133(US)**

(74) Representative: **Baillie, Iain Cameron et al
c/o Ladas & Parry Isartorplatz 5z 5
D-8000 München 2(DE)**

(54) Method of attaching a rubber sheeting to rigid insulation using a pressure-sensitive adhesive and corresponding articles.

(57) A method for attaching flexible rubber sheeting to rigid insulation for roofing applications using a pressure-senstive adhesive consisting essentially of a crosslinked polymer of monomers consisting essentially of from about 90 to 99 parts by weight of an alkyl acrylate and from about 1 to 10 parts by weight of a polar nitrogen-containing copolymerizable monomer and rigid insulation and rubber sheeting with said adhesive attached.

EP 0 405 798 A2

# METHOD OF ATTACHING A RUBBER SHEETING TO RIGID INSULATION USING A PRESSURE-SENSITIVE ADHESIVE AND CORRESPONDING ARTICLES

## BACKGROUND OF THE INVENTION

This invention relates to attaching a rubber sheeting to rigid insulation using a pressure-sensitive adhesive. Specifically, this invention relates to a method for the foregoing as well as a rubber sheeting and rigid insulation with the adhesive attached thereto.

In the construction industry, a roofing deck is covered with a rigid insulating material such as polystyrene or polyurethane foam. The foam sheet is normally of a sandwich-type construction, being covered on both major planar surfaces with a protective scrim of paper, fiberglass, or other suitable material. This foam sandwich layer must be covered with an impervious roofing material to protect it from weathering and render it waterproof. Typical of these impervious roofing materials is rubber sheeting, such as that made of polymerized ethylene, propylene and diene monomers, (known as EPDM rubber), or butyl rubber or blends of the two.

In practice, once the rigid insulation is in place, contact cement is used to bond the rubber sheeting to the insulation. A surface of the insulation and a surface of the rubber sheeting are coated with a layer of contact cement. The solvent from the cement is allowed to evaporate, and the two surfaces are brought together under pressure to complete the bond. Bonding by this method suffers from the difficulty of coating the surfaces evenly and easily using brushes, and from possible toxic effects or fire hazards arising due to the solvents contained in contact cements. Also, many cements are unacceptable for bonding rubber sheet materials because of the low surface energy of the rubber. Contact cements based on neoprene provide poor bond strength to cured EPDM rubber, although they exhibit excellent resistance to creep and cold flow. Conversely, butyl or isobutyl rubber based contact adhesives bond well to EPDM, yet have the disadvantages of poor creep, cold flow and heat strength characteristics.

An alternative to overall bonding of the rubber sheeting to the insulation by means of contact cement is ballasting using smooth river-washed stones. By this method, the rubber sheeting is secured to the roof at the edges, using either a contact cement or mechanical fasteners, and is then ballasted with stones. A disadvantage of this system is that the roof must be reinforced so that it can bear the additional weight of the ballast.

Other methods have been disclosed for the purpose of bonding rubber articles. Meyrick, et al., U.S. Pat. No. 2,826,526, describes a method for bonding natural or synthetic rubbers to fibrous material, e.g., tire cords, by means of condensation products of polyisocyanates and acetoacetic esters. The adhesive is applied as a solution in an organic solvent, or as an aqueous suspension, and then dried. Pressure and heat may also be applied.

A solvent-based, pressure-sensitive adhesive for bonding sheets of EPDM rubber is provided in Chmiel, et al., U.S. Pat. No. 4,501,842 and U.S. Pat. No. 4,623,164. It comprises a blend of a halogenated butyl rubber, crosslinked butyl rubber, a block copolymer of styrene, ethylene, butylene and styrene rubber, hydrocarbon solvent, and aliphatic isocyanate.

Moon, U.S. Pat. No. 4,364,972, describes a pressure-sensitive adhesive comprising a copolymer of an acrylic ester, the alkyl groups of which have between 4 and 14 carbons, and N -vinyl pyrrolidone. Optionally, a crosslinking agent may be employed. In this system, a solvent-free, monomeric syrup is partially polymerized and coated onto either a backing such as polyethylene terephathalate or a suitable release liner. Optimum results are described as being achieved at a weight ratio of acrylic ester to N -vinyl pyrrolidone of between 75:25 to 65:35. Ratios above 80:20 are said to significantly reduce cohesive values without improving adhesion

In a related application, U.S. Patent Application Serial No. 295,661, filed 1/6/89, entitled "Pressure-Sensitive Adhesive and Transfer Tape for Splicing Rubbery Membranes", the inventor of the present invention describes an adhesive composition used for seaming sheets of primed EPDM rubber. The adhesive is a terpolymer of an alkyl acrylate, a first polar, nitrogen-free comonomer such as acrylic acid, and a second, polar nitrogen-containing comonomer such as N -vinyl pyrrolidone. The acrylic acid component of the adhesive is necessary to provide adequate adhesion to the primed EPDM surface at the seam, but the acrylic acid content is minimized because of a concern that acrylic acid can promote migration of sulfur, a common vulcanizer of EPDM rubber, into the adhesive layer leading to crosslinking of the adhesive, and premature failure of the bond at the seam.

The present invention is directed towards using a pressure-sensitive adhesive to attach a flexible rubber sheeting to rigid insulation such as that used to insulate roofs of buildings. The sheeting and pressure-sensitive adhesive are applied across the entirety of the insulation material in order to provide a barrier against the encroachment of water, rain or other liquids normally occurring in the environment. This barrier must be provided under harsh conditions found in roofs which involve exposure to summer sun, as well as in some climates, exposure to temperatures well below $0°$ C. These variations in temperature provide mechanical stresses when the roof expands or contracts in response to the outside temperature. Thus, the rubber sheeting must be attached to the insulation with such an adhesive force that it can withstand the mechanical stresses caused by the variations in temperatures and conditions.

A method of attaching a flexible rubber sheeting to rigid insulation using an adhesive which would withstand the above stresses and was easy to apply in a relatively low risk way from a toxicity and flammability point of view was sought. Such a method has been found. It comprises a method for attaching a flexible rubber sheeting to rigid insulation by use of an adhesive comprising placing a normally tacky and pressure-sensitive adhesive consisting essentially of a crosslinked polymer of monomers consisting essentially of (a) from about 99 to about 90 parts by weight of an alkyl acrylate, the alkyl portion of which contains from 4 to 12 carbon atoms, and (b) from about 1 to about 10 parts by weight of a polar nitrogen-containing copolymerizable monomer between said sheeting and said insulation and applying pressure to the combination to form a bond between the sheeting, adhesive and insulation.

It has been found that with the method of the present invention sufficient tackiness is present in the specified adhesive to allow for a strong bond to the rubber sheeting and also allow for a firm attachment to the insulation material. It has also been found that the adhesive will maintain its properties over long periods of time in order to provide a permanent bond to the insulation and the rubber sheeting without interference from the inclusions in the rubber such as sulfur.

One means to practice the present invention is to attach the normally tacky and pressure-sensitive adhesive mentioned above to a flexible rubber sheeting. Normally, the pressure-sensitive adhesive is applied by coating it on a release liner such as silicone or polyethylene-coated paper and pressing the exposed adhesive surface to one surface of the rubber sheeting.

To apply the flexible rubber sheeting to an insulation material, the release liner is removed and the exposed adhesive face is pressed against the insulation, thus forming a bond between the insulation, adhesive and the rubber sheeting. Normally, the rubber sheeting/adhesive/release liner combination (barrier material) would be prepared off site. The release liner would be removed and the barrier material applied to the insulation at the construction site.

Alternatively, the adhesive can be applied to the rigid insulation before it is attached to the flexible rubber sheeting by pressing the exposed adhesive surface of the adhesive/release liner combination to one surface of the rigid insulation material. The insulation is then installed, the release liner removed and the flexible rubber sheeting pressed onto the adhesive attached to the rigid insulation.

The flexible rubber sheeting is impervious to moisture, is flexible to permit application to the contours of the roof, and durable enough to withstand exposure to temperature extremes without significant degradation. This sheeting is normally made of EPDM rubber or butyl rubber or blends of these rubbers, neoprene, chlorosulfonated polyethylene or polyisobutylene. These rubbers are often blended with fillers, colorants, extenders, stabilizers and crosslinking agents or vulcanizing agents, and are then calendered or extruded to form a rubber membrane or sheeting, which is heated to approximately $160°$ C for two hours to effect the vulcanization. The membranes thus formed are typically 1 to 2 millimeters thick and 2 to 10 meters wide. EPDM rubber sheeting is widely used for new· or retrofit flat roofing in commercial, institutional and industrial applications.

The normally tacky and pressure-sensitive adhesive included is a crosslinked polymer of the monomers described above. The adhesive must be sufficiently tacky to adhere to the rubber sheeting and to bond to the insulation material. It also must be resistant to the chemicals which are present in various rubber sheeting materials. It has been found that a particular crosslinked polymer combination of an alkyl acrylate monomer and polar nitrogen-containing copolymerizable monomer provides the above required properties. Specifically, it has been found that using about 99 parts to 90 parts by weight, preferably from 93 to 97 parts by weight, of the alkyl acrylate monomer and about 1 to 10 parts by weight, preferably 3 to 7 parts by weight, of a polar nitrogen-containing monomer provides the properties needed.

The alkyl acrylate is preferably a monofunctional acrylate ester of a non-tertiary alkyl alcohol, having from 4 to 12 carbon atoms. Examples of these acrylic esters are butyl acrylate, hexyl acrylate, ethylhexyl acrylate, isooctyl acrylate, decyl acrylate and dodecyl acrylate, with the preferred acrylic ester being isooctyl acrylate.

The polar, copolymerizable monomer is selected from strongly polar, nitrogen-containing monomers such as acrylamides or moderately polar nitrogen-containing monomers such as $\underline{N}$ -vinyl pyrrolidone, $\underline{N}$ -

vinyl caprolactam, N -vinyl piperidone and acrylonitrile. Other polar, and moderately polar, nitrogen-containing copolymerizable monomers are also suitable.

Ratios as specified above relative to the monomers provides the properties of peel and sheer strength described below which are necessary for the adhesive. Specifically, peel of at least 35 Newtons per decimeter and shear of at least 5 minutes to failure are required. Also the use of the monomers noted impedes the deleterious effect of the ingredients that can be found in certain rubber sheeting such as sulfur which may provide continued crosslinking of the adhesive and thereby hardening. This hardening causes adhesive over time to become less adhesive and for failures to occur.

The adhesive is crosslinked preferably using a photo-crosslinking agent. Most thermal crosslinking agents are unsuitable for the adhesive of the present invention for they will continue to crosslink the adhesive after application of adhesive to the sheeting and insulation ultimately degrading the adhesive properties. Photo-crosslinking agents allow for a careful control of the degree of crosslinking through the use of controlled exposure of the adhesive to light. Further crosslinking after application of the sheeting and adhesive to the insulation is minimized because the rubber sheeting is opaque.

Examples of suitable crosslinking agents may be found in Vesley, U.S. Pat. No. 4,330,590, and Vesley, et al., U.S. Pat. No. 4,329,384, which describe triazine-type crosslinking agents. The preferred triazine-type crosslinking agent is 2-methoxy-4,6-trichloromethyl triazine. Other suitable photo-crosslinking agents are aliphatic diol diacrylates, with most preferred being 1,6-hexanediol diacrylate as disclosed in Heilmann, et al., U.S. Pat. No. 4,379,201. The crosslinking agent may be employed in the range of 0.01 to 1 parts by weight, preferably between 0.01 and 0.1 parts by weight.

A small amount of a photoinitiator may be added at a rate of from 0.01 to 1 parts by weight, preferably 0.04 to 0.25 parts by weight, in order to improve the efficiency of the photopolymerization process. Suitable photoinitiators include benzoin ethers, substituted benzoin ethers, substituted alpha-ketols, and photoactive oximes. A preferred photoinitiator is a substituted acetophenone such as 2,2-dimethoxy-2-phenyl acetophenone, available as IRGACURE 651 photoinitiator from Ciba-Geigy, Hawthorne, New York.

The rigid insulating materials generally comprise foamed plastics in sheet form, although in some cases plywood is used. These materials are secured to a roofing deck, typically with mechanical fasteners, and are protected from exposure with the rubber sheeting. Foamed plastics are employed because of their low density, low thermal conductivity and resistance to moisture. These insulating materials are made of, for example, polystyrene, isocyanurate, polyurethane, phenolic foam and foamed polyvinyl chloride. The rigid foam boards may have a protective glass fiber or paper facing attached to one or both major faces of the board to protect the foam from exposure to light, oxygen or mechanical abrasion.

The process of photopolymerization of the adhesive described above is preferably carried out in an inert atmosphere such as nitrogen as is described in Martens, U.S. Pat. No. 4,181,752, or Levens, U.S. Pat. No. 4,303,485. A partially polymerized blend of the monomer used in preparing the adhesive is typically coated on a release liner such as polyethylene- or silicone-coated paper and then cured by exposure to actinic radiation, forming a crosslinked adhesive layer. The use of a release liner allows the adhesive film to be quickly and easily attached to the rubber sheeting material or rigid insulation by the use of pressure from rollers such as nip rolls. Alternatively, the adhesive can be polymerized or crosslinked directly on the rubber sheeting or rigid insulation.

The following test procedures were used in the following examples:

1. 90°-peel test - An adhesive on a silicone-coated paper release liner (transfer tape) is applied to the rigid insulation using a hard plastic squeegee to ensure complete contact. The liner is removed and a 2.54 cm by 10.16 cm sample of rubber sheeting (1.15 millimeters in thickness) (EPDM sheeting from Carlisle Syntec Corp., Carlisle, Pennsylvania, unless otherwise noted) is laid on the adhesive, which is then rolled with a 5 cm wide, 2 kg. hard rubber roller. After 24 hours, the test strip is pulled out at a 90° angle relative to the rigid insulation at a rate of 30.5 cm per minute using an Instron testing device. The peel values are reported in Newton/Decimeter.

2. Shear test - A 6.45 cm² square of rubber sheeting (EPDM sheeting from Carlisle Syntec Corp., Carlisle, Pennsylvania, unless otherwise noted) was adhered to the rigid insulation as in the peel test above. An aluminum block, also of 6.45 cm² surface area, was then bonded by means of an acrylic pressure-sensitive adhesive, as described in Example 6 of Levens, U.S. Pat. No. 4,223,067, to the surface of the rubber sheeting. After 24 hours, the composite was hung at room temperature (20°C) vertically with the insulation secured from the top and a 300 gram weight suspended from the aluminum block below. The time (in minutes) required for the adhesive to fail was recorded. A similar test was performed at 66°C instead of room temperature to measure the effect of high temperature on the performance of the adhesive.

The following examples are to illustrate the invention, but are not meant to limit the scope of the invention. All parts and percentages are by weight unless otherwise specified.

4

## Example 1

Into a .95L clear glass bottle was placed 384 grams of isooctyl acrylate monomer (IOA), 16 grams of N-vinyl pyrrolidone (NVP) and 0.16 grams of IRGACURE 651 photoinitiator, Ciba-Geiby, Hawthorne, New York, at room temperature (20°C). The contents of the bottle was purged with a constant flow of nitrogen by means of a purge tube fitted through an opening in the bottle cap.

After fifteen minutes with continuous nitrogen purge, a low-intensity UV light source of approximately 40 watts was directed to the bottle, which was agitated to prevent polymer build-up on the glass surface. After approximately 25 seconds of exposure to the UV light, the monomer mixture builds in viscosity to approximately 1000 cps from an initial viscosity of about 10 cps, as measured by a Brookfield viscometer model LBT, and the light was extinguished. The nitrogen purge was ceased and air was allowed to enter the bottle. To the partially polymerized blend was added an additional 0.44 grams of IRGACURE 651 photoinitiator and 0.08 grams of a triazine crosslinking agent, 2-methoxy-4,6-trichloromethyl triazine.

The partially polymerized adhesive blend was coated using a knife coater to a thickness of 127 microns onto a silicone-treated polyethylene terephthalate release liner. Under an inert atmosphere of nitrogen, polymerization was effected by further exposure to a UV light source of 500 millijoules of energy.

The pressure-sensitive adhesive transfer tape thus obtained was cut into 2.54 cm pieces and used in the test previously described. The rigid insulation used was an isocyanurate board of 5 cm thickness, having an integral fiberglass facing 5 cm thick (Celo-Foam Ultra, available from Celotex, Tampa, Florida). The results of these tests are shown in Table 1.

## Example 2

These samples were prepared as in Example 1 using the same batch size except with different amounts of IOA and NVP, or by varying the amount of crosslinking agent employed. The parts of these components are listed in Table 1. The amount of IRGACURE included initially was 0.04 parts. These samples were tested as in Example 1, again using an isocyanurate foam board as in Example 1, and the results shown in Table 1.

Table 1

| Ex. | IOA/NVP Parts | Total IRGACURE 651 Parts | Triazine Crosslinker Parts | 90° Peel N/dm | Shear = Minutes to Failure R.T. 66°C |
|------|------|------|------|------|------|
| 1 | 96/4 | .15 | .02 | 156.3 | 6.0/6.5 |
| 2a | 93/7 | .2 | .02 | 174.1 | 7.2/ |
| 2b | 87/13 | .2 | .02 | 38.5 | 12.5/ |
| 2c | 93/7 | .2 | .04 | 55.0 | 22.7/11.5 |
| 2d | 87/13 | .2 | .04 | 28.9 | 21.6/ |
| 2e | 90/10 | .2 | .01 | 96.2 | 6.1/ |
| 2f | 90/10 | .2 | .03 | 40.2 | 8.0/ |
| 2g | 93/7 | .2 | .03 | 88.7 | /7.05 |
| 2h | 96/4 | .2 | .04 | 65.3 | /14.3 |

## Example 3

This sample was prepared as in Example 1 using the same batch size, except 0.03 parts hexanediol diacrylate (HDDA) was substituted for the triazine crosslinking agent, and the total amount of IRGACURE photoinitiator used was 0.2 parts. The 90° peel was measured and reported in Table 2.

5

### Example 4

These samples were prepared as in Example 1 using the same batch size and using hexanediol diacrylate as the crosslinking agent. The coating thickness was varied and the 90° peel values are shown in Table 2.

Table 2

| Ex. | IOA/NVP Parts | IRGACURE Parts | HDDA Parts | Thickness | 90° Peel N/dm |
|---|---|---|---|---|---|
| 3 | 90/10 | .2 | .03 | 127 microns | 135.6 |
| 4a | 96/4 | .2 | .04 | 76 microns | 59.5 |
| 4b | 96/4 | .2 | .04 | 102 microns | 71.8 |
| 4c | 96/4 | .2 | .04 | 127 microns | 85.8 |

In each of the previous Examples 1-4, the dominant failure mode was not the adhesive, but rather cohesive failure of the foam, or delamination of the facing of the foam. Examples 2b and 2d are included for comparative purposes. The adhesives of Examples 2b,d were not sufficiently tacky to bond rapidly to the surface of the rubber, and required excessive time and pressure to bond.

### Examples 5, 6

The adhesive of Example 4c was used and the procedures relative to testing the composite was followed as in Example 4 except that an isocyanurate foam board of 5 cm thickness having a paper facing (available as ULTRAGARD GOLD from Manville Corp., Denver Colorado), was used instead of the fiberglass facing of the previous examples. The 90° peel result is listed in Table 3. In Example 6, the adhesive of Example 4c was used and the procedure relative to testing the composite was followed as in Example 5 except that white chlorosulfonated polyethylene, 1.15 millimeters thick, (available as HI-TUFF from JPS Elastomerics Corp., Northampton, MA), was used instead of EPDM, and polystyrene (Amofoam-CM, 2.54 cm thick, available from Amoco, Atlanta, Georgia) having no facing, was used instead of an isocyanurate foam board. The results of the 90° peel are shown in Table 3.

Table 3

| Example | 90° Peel N/dm |
|---|---|
| 5 | 4.4 |
| 6 | 61.1 |

In Example 5, the failure mode was predominately due to delamination of the paper facing from the foam, and the 90° peel values were limited by this delamination.

### Example 7

The adhesive of Example 4c was coated onto a silicone release liner and cured as in Example 1. The adhesive was laminated to a sheet of 1,143 microns thick EPDM rubber sheeting (Carlisle Syntec Corp., Carlisle, Pennsylvania) using the squeegee procedure of the 90° peel test. The release liner was removed and the adhesive-EPDM sheeting composite was applied over the Manville ULTRAGARD GOLD insulation board described in Example 5 and rolled with the rubber roller of the 90˚ peel test procedure to insure an intimate bond. After 24 hours, samples were prepared for testing as previously described. The peel and shear time results were the same as for samples made by first applying the adhesive to the rigid insulation.

**Claims**

1. A method for attaching a flexible rubber sheeting to rigid insulation by use of an adhesive comprising placing a normally tacky and pressure-sensitive adhesive consisting essentially of a crosslinked polymer of monomers consisting essentially of (a) from about 99 to about 90 parts by weight of an alkyl acrylate, the alkyl portion of which contains from 4 to 12 carbon atoms, and (b) from about 1 to about 10 parts by weight of a polar nitrogen-containing copolymerizable monomer between said sheeting and said insulation and applying pressure to the combination to form a bond between the sheeting, adhesive and insulation.

2. The method of claim 1 in which the monomers include from about 0.01 to about 1 part by weight of a photo-crosslinking agent.

3. The method of claim 2 in which the photo-crosslinking agent is selected from the class consisting of triazine and aliphatic diol diacrylates.

4. The method of claim 3 in which the adhesive has a 90˚ peel of at least 35 Newtons per decimeter and a shear of at least 5 minutes to failure.

5. A moisture-resistant barrier material for use on rigid insulation comprising a flexible rubber sheeting which has attached thereto a normally tacky and pressure-sensitive adhesive consisting essentially of a crosslinked polymer of monomers, consisting essentially of (a) from about 99 to about 90 parts by weight of an alkyl acrylate, the alkyl portion of which contains from 4 to 12 carbon atoms, and (b) from about 1 to about 10 parts by weight of a polar nitrogen-containing copolymerizable monomer.

6. The barrier material of claim 5 in which the monomers include from about 0.01 to about 1 part by weight of a photo-crosslinking agent.

7. The barrier material of claim 6 in which the photo-crosslinking agent is selected from the class consisting of triazine and aliphatic diol diacrylates.

8. The barrier material of claim 7 in which the adhesive has a 90˚ peel of at least 35 Newtons per decimeter and a shear of at least 5 minutes to failure.

9. The barrier material of claim 5 in which the monomers consist essentially of 93 to 97 parts by weight of an alkyl acrylate and 3 to 7 parts by weight of the copolymerizable monomer.

10. An adhesive containing rigid insulation material for use in roofing applications with flexible rubber sheeting comprising a rigid insulation which has attached thereto a normally tacky and pressure-sensitive adhesive consisting essentially of a crosslinked polymer of monomers, consisting essentially of (a) from about 99 to about 90 parts by weight of an alkyl acrylate, the alkyl portion of which contains from 4 to 12 carbon atoms, and (b) from about 1 to about 10 parts by weight of a polar nitrogen-containing copolymerizable monomer.